# EUROPÄISCHE PATENTSCHRIFT

(11) **EP 1 574 616 B1**
(45) Veröffentlichungstag und Bekanntmachung des Hinweises auf die Patenterteilung: **05.07.2006**
(21) Anmeldenummer: 04005978.4
(22) Anmeldetag: 12.03.2004
(51) Int. Cl.: D21F 1/00

(54) **Papiermaschinenband**
Papermaking belt
Bande pour machine à papier

(43) Veröffentlichungstag der Anmeldung: 14.09.2005
(73) Patentinhaber: Heimbach GmbH & Co., 52353 Düren (DE)
(72) Erfinder: Best, Walter Dr., 52321 Düren (DE); Molls, Christian, 52070 Aachen (DE)
(74) Vertreter: Paul, Dieter-Alfred

(56) Entgegenhaltungen:
- EP-A- 1 357 223
- EP-A- 1 357 224
- DE-U- 9 211 776
- US-A- 1 807 628

## Beschreibung

Die Erfindung betrifft ein Papiermaschinenband mit sich quer zur Laufrichtung erstreckenden Stirnkanten und mit einem Fadengelege mit mindestens einem Längsfadengelege und einem Querfadengelege, wobei die Längsfäden mit den Querfäden an den Kreuzungsstellen miteinander verbunden sind, sowie mit einer die Stirnkanten verbindenden bzw. verbindbaren Kupplungseinrichtung, die an beiden Stirnkanten jeweils an dem Fadengebilde angreifende Kupplungselemente aufweist.

In Papiermaschinen kommen lange und breite Bänder zum Einsatz, die in der Papiermaschine umlaufen und dabei die Papierbahnen unterstützen. In der Regel handelt es sich dabei um textile Filze oder Siebe, die als Basis ein Fadengebilde, beispielsweise ein Gewebe oder Gewirke aufweisen. Statt eines solchen Fadengebildes können auch Fadengelege mit wenigstens einer Lage Längsfäden und wenigstens einer Lage die Längsfäden kreuzenden Querfäden vorgesehen werden, wobei die Längs- und Querfäden an den Kreuzungspunkten mittels Klebstoff, Formschluß und/oder Verschmelzung miteinander verbunden sind (EP 1 357 223 A1; EP 1 359 252 A1; EP 1 359 251 A1).

Für den Einsatz im Blattbildungsbereich und in der Trokkenpartie einer Papiermaschine besteht das Papiermaschinenband aus dem Fadengebilde als solchem. Für den Einsatz in der Pressenpartie einer Papiermaschine werden auf die Fadengebilde ein oder mehrere Faserschichten aufgenadelt.

In vielen Fällen werden die Papiermaschinenbänder nicht endlos, sondern in einer bestimmten Länge hergestellt. Die endseitigen Stirnkanten werden dann vor dem Einzug in die Papiermaschine oder auch in der Papiermaschine selbst über eine Naht miteinander verbunden. Dabei hat sich insbesondere die sogenannte Steckdrahtnaht durchgesetzt. Bei dieser Naht werden an den einander zugewandten Stirnkanten des Bandes Kupplungselemente mit einer Vielzahl von Kupplungsösen vorgesehen, die zum Schließen derart in Überlappung gebracht werden, daß sie kammartig ineinander greifen und ein sich in Bandquerrichtung erstreckender Durchgangskanal gebildet wird. In diesem Durchgangskanal wird dann ein Kupplungsdraht eingeschoben, der die beiden Stirnkanten des Bandes nach Art eines Scharniers verbindet.

Für die Ausbildung der Kupplungsösen sind verschiedene Systeme bekannt. So können die Kupplungsösen durch Umschlagen der Endbereiche des Papiermaschinenbandes gebildet werden (US-A-2,077,891; US-A-3,309,790). Es können auch einzelne Fäden umgeschlagen und zurückgewebt werden (US-A-5,148,838).

Alternativ dazu können die Kupplungsösen durch U-förmige Klammern gebildet werden, die sich in die Enden des Papiermaschinenbandes einkrallen. Die mit Hilfe solcher Kupplungsösen hergestellten Nähte werden als Klippernähte bezeichnet (DE-A-2 256 244; US-A-4,344,209). Daneben ist es bekannt, die Kupplungsösen jeweils durch ein U-förmiges Blechteil zu bilden, wobei die Schenkel jedes Blechteils mit der zugehörigen Stirnkante des Bandes verbunden sind (US-A-3,972-105). In die Blechteile sind eine Vielzahl von Ausschnitten eingeformt, so daß Kupplungsvorsprünge mit Kupplungsösen entstehen.

Eine andere Alternative besteht darin, Kupplungsösen durch jeweils an den Stirnkanten befestigte Kupplungswendeln zu bilden (DE-A-2 256 244; US-A-4,477,435; EP 0 185 907 B1; EP 0 564 436 A1). Die Verbindung der Wendeln mit den Stirnseiten des Papiermaschinenbandes geschieht entweder mittels besonderen Nahtfäden oder durch die Längsfäden des Fadengebildes, indem diese die Windungen der Wendeln umschlingen und zurückgewebt werden. Dabei können in die Wendeln Fäden oder Drähte eingelegt sein, um die die Längsfäden herumgelegt werden (DE-A-2 256 244, Figur 8e; EP 0 185 907 B1, Figur 10).

Statt Kupplungswendeln sind als Kupplungsösen bildende Kupplungselemente auch besondere Formteile aus Kunststoff bekannt, die jeweils mit den Längsfäden des Papiermaschinenbandes verbunden werden (WO 96/34146; DE-A-199 44 864; GB-A-2 231 838). Die Längsfäden werden hierzu umgeschlagen und in der Regel zurückgewebt. Dabei können in die Formteile Querdrähte eingelegt sein, die die Formteile verstärken oder um die die Längsfäden herumgelegt sind (DE-A-199 44 864, Figuren 1 und 6).

Für gattungsbildende Papiermaschinenbänder mit einem Fadengelege sind zur Verbindung der Stirnkanten komplementäre Kupplungselemente vorgeschlagen worden, an denen scharnierartig miteinander verbundene Kupplungsglieder angebracht sind, wobei die verbindung mit den Stirnkanten über Steckverbindungen mit den Längsfäden herstellt wird (EP-A-1 357 224). Dabei können die Kupplungselemente als Kupplungsleisten ausgebildet sein, die sich über die gesamte Breite des Papiermaschinenbandes oder nur einen Teil dieser Breite erstrecken, wobei dann nebeneinander mehrere Kupplungsleisten vorgesehen sind. Es hat sich jedoch gezeigt, daß diese Art Verbindung in Fällen, in denen das Papiermaschinenband hohen Längskräften ausgesetzt ist, nicht haltbar genug ist.

Der Erfindung liegt die Aufgabe zugrunde, eine Naht zur Verbindung der Stirnkanten eines Papiermaschinenbandes der Eingangs genannten Art so zu gestalten, daß sie hohe Längskräfte in dem Papiermaschinenband aufnehmen und übertragen kann und deshalb für Papiermaschinenbänder geeignet ist, deren Fadengebilde als Fadengelege mit gegenseitiger Verbindung der Längs- mit den Querfäden ausgebildet ist.

Diese Aufgabe wird erfindungsgemäß dadurch gelöst, daß sich die Kupplungselemente an den den Stirnkanten abgewandten Seiten von zum Fadengelege gehörenden Querfäden abstützen. Grundgedanke der Erfindung ist es also, die Kupplungselemente an den den Stirnkanten des Papiermaschinenbandes abgewandten Seiten direkt angreifen zu lassen. Dabei kann die Abstützung je nach den aufzunehmenden Zugkräften über jeweils einen, aber auch mehrere Querfäden vorgesehen sein. Es hat sich gezeigt, daß auf diese Weise eine hochfeste Verbindung zwischen den Stirnkanten des Papiermaschinenbandes und der Kupplungseinrichtung hergestellt wird, so daß die Kupplungseinrichtung bei entsprechender Dimensionierung ihrer Einzelteile hohe Zugkräfte aufnehmen kann.

An den Kreuzungsstellen sollten die Längs- und Querfäden flächig aufeinander liegen, so daß eine gute Verbindung beispielsweise mittels Klebstoff oder durch gegenseitiges Verschmelzen hergestellt werden kann. Hierzu ist es besonders vorteilhaft, wenn die Längs- und Querfäden als Flachfäden ausgebildet sind, bei denen die Breite der Fäden ein vielfaches der Dicke dieser Fäden beträgt. Dabei können die Längs- und/oder die Querfäden mehrere Lagen, also auch mehr als zwei Lagen, bilden, wobei jeweils eine Lage von Längsfäden an einer Lage von Querfäden anliegt.

Wie schon erwähnt, können sich die Kupplungselemente jeweils nicht nur an einem, sondern an mehreren Querfäden, zweckmäßigerweise zwei oder drei Querfäden abstützen, wobei die Querfäden sinnvollerweise benachbart sind. Die Abstützung kann dabei auch an dem der Stirnkante des Bandes benachbarten Querfaden geschehen.

Die Kupplungselemente können sich jeweils über die gesamte Breite des Papiermaschinenbandes durchgehend erstrekken. Es kann jedoch auch vorgesehen sein, daß an einer Stirnkante mehrere Kupplungselemente in Querrichtung nebeneinander angeordnet sind, wobei die Erstreckung der Kupplungselemente über zumindest einen Längsfaden geht, oder auch mehrere Längsfäden umfassen kann.

Eine besonders gute Abstützung der Kupplungselemente an den Querfäden wird dann erreicht, wenn sich die Kupplungselemente an den Querfäden im Kreuzungsbereich mit den Längsfäden abstützen. Dies gilt insbesondere für den Fall, daß die Längs- und Querfäden im Kreuzungsbereich miteinander fest verbunden sind, beispielsweise durch Verschweißung, Verklebung oder Formschluß. Auf diese Weise werden die Kräfte über die Querfäden unmittelbar in die Längsfäden eingeleitet. Hierzu können die Kupplungselemente eine oder mehrere Längsstreben aufweisen, die sich in Zwischenräume zwischen jeweils zwei Längsfäden erstrecken, wobei die Querstrebe(n) jeweils an einer der Stirnkante abgewandten Seite des jeweiligen Querfadens anliegt bzw. anliegen. Sofern die Kupplungselemente jeweils mehrere Längsstreben aufweisen, sollten die Längsstreben durch die Querstreben miteinander verbunden werden.

Die Anzahl der Längsstreben kann den jeweiligen Anforderungen angepaßt werden. Es müssen nicht in jedem Zwischenraum Längsstreben verlaufen. Es ist jedoch zweckmäßig, wenn die Längsstreben wenigstens einen Längsfaden, besser noch mehrere Längsfäden beidseitig einfassen, so daß sie durch die Längsfäden ausgerichtet werden. Zweckmäßigerweise füllen die Längsstreben im letzteren Fall die Zwischenräume zwischen den Längsfäden vollständig aus. Zusätzlich können die Längsstreben auch eine Querstrebe an der der Stirnkante zugewandten Seite des dieser Stirnkante benachbarten Querfadens aufweisen, so daß sie diesen Querfaden beidseitig einfassen.

Was die Kupplungselemente selbst betrifft, sollten sie in miteinander verbundenem Zustand wenigstens ein Gelenk mit einer zu den Stirnkanten parallelen Gelenkachse ausbilden, damit das Papiermaschinenband auch über Walzen mit kleinem Durchmesser geführt werden kann. Besonders geeignet hierfür sind Scharniergelenke, beispielsweise bestehend aus einem Kupplungsdraht und den Kupplungsdraht umschließenden Kupplungsösen, die an den Kupplungselementen ausgebildet sind. Die Kupplungsösen können dabei verschiedenartige Formen haben, wie sie beispielsweise aus dem vorstehend beschriebenen Stand der Technik bekannt sind.

Alternativ dazu kann vorgesehen sein, daß jeweils ein Kupplungsglied von einem Kupplungselement und ein benachbartes Kupplungsglied von dem gegenüberliegenden Kupplungselement Gliederpaare bilden, die scharnierartig ineinander gesteckt sind, wobei das eine Kupplungsglied eines Gliederpaares einen Zapfen aufweist, der in eine komplementäre Ausnehmung in dem anderen Kupplungsglied dieses Gliederpaares einfaßt. Zweckmäßigerweise sind die Zapfen in den Ausnehmungen derart verrastet, daß die Kupplungsglieder gegeneinander scharnierartig verschwenkbar sind, jedoch nicht axial gegenseitig verschiebbar (vgl. die in den Figuren 4 und 5 der EP 1 357 224 A2 gezeigte und in der zugehörigen Beschreibung offenbarte Kupplungseinrichtung).

Eine weitere Alternative der gelenkartigen Verbindung besteht darin, daß in einer Gelenkachse eine Vielzahl von Gelenken ausgebildet ist, die jeweils aus einem Kupplungssteg und einem diesen hinterfaßenden Kupplungshaken bestehen. Dabei ist es besonders vorteilhaft, wenn die Kupplungshaken als Schnapphaken ausgebildet sind. Darunter sind solche Haken zu verstehen, die beim Einfassen hinter dem Kupplungssteg elastisch aufgeweitet werden und nach dem Einrasten wieder zurückschnappen. Die Kupplungsstege können dadurch gebildet werden, daß loch- oder fensterartige Ausnehmungen in den Kupplungselementen gebildet werden.

Statt scharnierartiger Gelenke können auch als Biegegelenke ausgebildete Gelenke verwendet werden, insbesondere dann, wenn an die Gelenkigkeit der Verbindung nicht zu hohe Ansprüche gestellt werden.

Es ist nicht erforderlich, daß das Gelenk bzw. die Gelenke die Verbindung zwischen den beiden Kupplungselementen herstellen. Es kann nämlich vorgesehen sein, daß das bzw. die eine Gelenkachse bildende(n) Gelenk(e) an dem bzw. den Kupplungselement(en) einer Stirnkante ausgebildet sind und diese Kupplungselemente über verbindungsmittel mit den Kupplungselementen an der anderen Stirnkante verbunden sind. Eine solche Ausbildung kann auch an den Kupplungselementen beider Stirnkanten vorgesehen sein, so daß beide Kupplungselemente Gelenke mit jeweils einer Gelenkachse aufweisen und hierdurch die Kupplungseinrichtung besonders gelenkig ist. Zusätzlich können auch die Verbindungsmittel, die die beiden Kupplungselemente verbinden, gelenkartig ausgebildet sein, so daß eine zweite bzw. dritte Gelenkachse ausgebildet wird.

Unabhängig von der Ausbildung der Gelenke und der Anordnung der Gelenkachsen ist nach der Erfindung vorgesehen, daß zumindest zwei nebeneinanderliegende Gelenkachsen durch entsprechende Gelenke ausgebildet werden, um die Gelenkigkeit der Verbindung der beiden Stirnkanten zu verbessern. Dies kann beispielsweise dadurch verwirklicht werden, daß die Kupplungselemente längs jeder Gelenkachse eine Vielzahl von Kupplungsstegen ausbilden, die über eine Hakenleiste mit die Kupplungsstege hinterfassenden Kupplungshaken verbunden sind, so daß sich zwei Gelenkachsen bilden. Die Kupplungsstege können - wie schon oben beschrieben - durch Einformen von Löchern oder Fenstern in den Kupplungselementen gebildet werden.

Unabhängig davon, ob die Verbindung gelenkig ausgebildet ist oder nicht, können die Kupplungselemente formschlüssig ineinandergreifende verbindungsmittel aufweisen, über die die Kupplungselemente an einer Stirnkante mit den Kupplungselementen an der anderen Stirnkante verbunden bzw. verbindbar sind. Dabei können die Verbindungsmittel einerseits als Verbindungsausnehmung und andererseits als in die Verbindungsausnehmungen einfassende Verbindungsvorsprünge ausgebildet sein. Die Verbindungsausnehmung können beispielsweise als Löcher oder Fenster und die Verbindungsvorsprünge als Verbindungshaken oder -stifte ausgebildet sein.

Alternativ dazu ist vorgesehen, daß die Kupplungselemente als Magnete ausgebildete Verbindungsmittel aufweisen. Die Magnete können stirnseitig mit sich senkrecht zur Ebene des Papiermaschinenbandes erstreckenden Verbindungsflächen aneinanderliegen. Es besteht jedoch auch die Möglichkeit, die Magnete aufeinander zu legen, so daß die Verbindungsflächen sich in der Ebene des Papiermaschinenbandes erstrecken.

In der Zeichnung ist die Erfindung anhand von Ausführungsbeispielen näher veranschaulicht. Es zeigen:
- Figur 1: eine Draufsicht auf einen Ausschnitt eines ersten Papiermaschinenbandes;
- Figur 2: einen Längsschnitt durch das Papiermaschinenband gemäß dem Ausschnitt von Figur 1;
- Figur 3: die Draufsicht gemäß Figur 1, jedoch ohne die vier der Kupplungseinrichtung benachbarten Querfäden;
- Figur 4: eine Draufsicht auf einen Ausschnitt eines zweiten Papiermaschinenbandes;
- Figur 5: einen Längsschnitt durch das Papiermaschinenband gemäß dem Ausschnitt von Figur 4;
- Figur 6: eine Draufsicht auf Verbindungsglieder für die Kupplungseinrichtung des Papiermaschinenbandes gemäß den Figuren 4 und 5;
- Figur 7: eine stirnseitige Ansicht eines verbindungsgliedes gemäß Figur 6;
- Figur 8: eine Draufsicht auf einen Ausschnitt eines dritten Papiermaschinenbandes;
- Figur 9: einen Längsschnitt durch das Papiermaschinenband gemäß dem Ausschnitt von Figur 8;
- Figur 10: eine Draufsicht gemäß Figur 8, jedoch ohne die der Kupplungseinrichtung benachbarten vier Querfäden;
- Figur 11: eine Draufsicht auf den Ausschnitt eines vierten Papiermaschinenbandes;
- Figur 12: einen Längsschnitt durch das Papiermaschinenband gemäß dem Ausschnitt von Figur 11;
- Figur 13: einen Längsschnitt durch einen Ausschnitt eines fünften Papiermaschinenbandes;
- Figur 14: eine Draufsicht auf das Papiermaschinenband gemäß dem Ausschnitt von Figur 13, jedoch ohne die vier der Kupplungseinrichtung benachbarten Querfäden;
- Figur 15: eine Draufsicht auf einen Ausschnitt eines sechsten Papiermaschinenbandes;
- Figur 16: einen Längsschnitt durch das Papiermaschinenband gemäß dem Ausschnitt von Figur 15;
- Figur 17: eine Draufsicht gemäß Figur 15, jedoch ohne die vier der Kupplungseinrichtung benachbarten Querfäden;
- Figur 18: eine Draufsicht auf einen Ausschnitt eines siebten Papiermaschinenbandes;
- Figur 19: einen Längsschnitt durch das Papiermaschinenband gemäß dem Ausschnitt von Figur 18;
- Figur 20: eine Draufsicht gemäß Figur 18, jedoch ohne die vier der Kupplungseinrichtung benachbarten Querfäden.

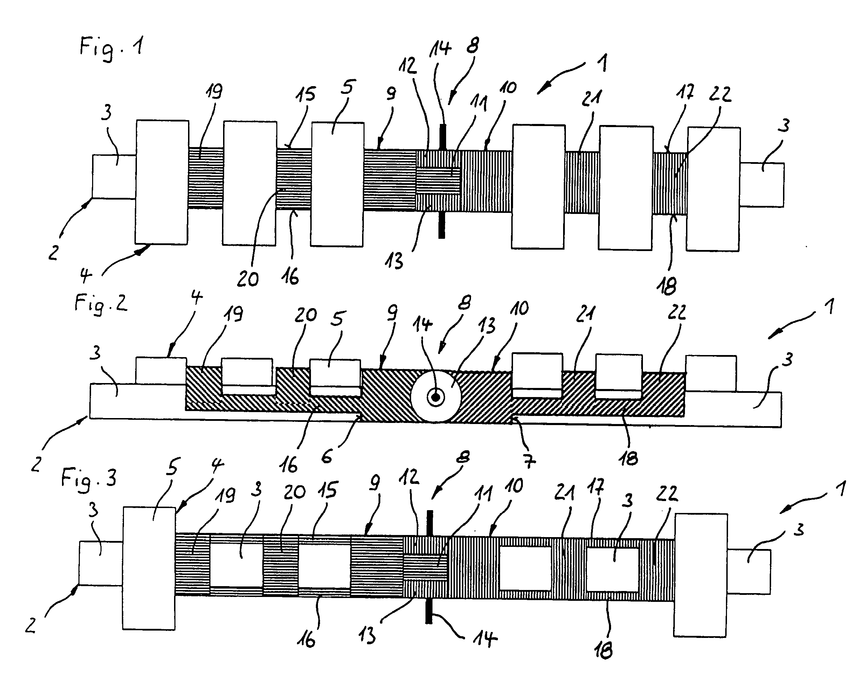

In den Figuren 1 bis 3 ist ausschnittweise der Nahtbereich eines ersten Papiermaschinenbandes 1 dargestellt. Das Papiermaschinenband 1 besteht im wesentlichen aus einem untenseitigen Längsfadengelege 2 mit einer Vielzahl von parallel im Abstand zueinander verlaufenden Längsfäden 3 - von denen hier nur ein Längsfaden 3 dargestellt ist - und einem darauf angeordneten Querfadengelege 4 mit ebenfalls einer Vielzahl von im Abstand zueinander parallel verlaufenden Querfäden - beispielhaft mit 5 bezeichnet -, welche auf den Längsfäden 3 flächig aufliegen und von denen hier nur ein Teil dargestellt ist. Die Längs- und Querfäden 3, 5 sind an den Kreuzungsflächen miteinander verschmolzen und damit fest verbunden. Sie bestehen aus einem Thermoplast, beispielsweise PET, PA in allen Modifikationen, PPS, PEK, PEEK, elastischen Polyester, PBT oder PTT oder Kombinationen daraus. Das Verschmelzen geschieht durch auf die Kreuzungsflächen begrenztes Erhitzen auf Schmelztemperatur und anschließendes Erkalten. Das Erhitzen kann beispielsweise mit Hilfe eines Lasers durchgeführt werden.

Das Papiermaschinenband 1 hat eine Vielzahl von in Breitenrichtung nebeneinander angeordneten Längsfäden 3, wobei sich die Längsfäden 3 in der für den Umlauf eines Papiermaschinenbandes in der Papiermaschine vorgesehenen Laufrichtung erstrecken. Die Längs- und Querfäden 3, 5 setzen sich - was hier nicht dargestellt ist - zu beiden Seiten fort, so daß sich insgesamt ein schlauchförmiges Gebilde mit großer Länge und auch erheblicher Breite ergibt. Das Papiermaschinenband 1 ist endlich, d.h. es hat freie Stirnkanten 6, 7, die über eine Kupplungseinrichtung 8 miteinander so verbunden sind, so daß sich nach Schließen der Kupplungseinrichtung 8 ein endloses, für den Umlauf in der Papiermaschine geeignetes Papiermaschinenband 1 ergibt.

In den Figuren 1 bis 3 sind die beiden Stirnkanten 6, 7 zusammengeführt, so daß sie sich stirnseitig gegenüberstehen. Die Stirnkanten 6, 7 werden dabei von den Enden der Längsfäden 3, d.h. von dem Längsfadengelege 2, sowie den jeweils der Kupplungseinrichtung 8 benachbarten Querfäden 5 gebildet. Die beiden jeweils gegenüberstehenden freien Enden sind Teil desselben Längsfadens 3, der sich über die gesamte Länge des Papiermaschinenbandes 1 erstreckt.

Die Kupplungseinrichtung 8 wird aus einer Vielzahl von Kupplungselementen 9, 10 gebildet, wobei den Enden jedes Längsfadens 3 je ein Kupplungselement 9, 10 zugeordnet ist. Die Kupplungselemente 9, 10 haben einen scharnierartig ausgebildeten Kupplungsbereich, wo sie sich gegenseitig unter Ausbildung einer Kupplungsöse 11 am linksseitigen Kupplungselement 9 und zwei diese Kupplungsöse 11 beidseitig einfassenden Kupplungsösen 12, 13 am rechtsseitigen Kupplungselement 10 überlappen. Die Kupplungsösen 11, 12, 13 durchsetzt ein Kupplungsdraht 14, der sich über die gesamte Breite des Papiermaschinenbandes 1 erstreckt und somit auch die an den anderen, hier nicht gezeigten Längsfäden angebrachten Kupplungselemente durchsetzt. Auf diese Weise sind die Kupplungselemente 9, 10 scharnierartig mit einer sich parallel zu den Stirnkanten 6, 7 erstreckenden Gelenkachse verbunden.

Von dem Kupplungsbereich beider Kupplungselemente 9, 10 erstrecken sich in die Zwischenräume zwischen den Längsfäden 3 je zwei Längsstreben 15, 16, 17, 18, die jeweils den Längsfaden 3 beidseitig einfassen und unter zwei Querfäden 5 verlaufen. Die Paare von Längsstreben 15, 16 bzw. 17, 18 sind jeweils über zwei Abstützbrücken 19, 20 bzw. 21, 22 miteinander verbunden. Diese überqueren den Längsfaden 3 in dem Zwischenraum zwischen jeweils zwei Querfäden 5 und füllen diese Zwischenräume nahezu vollständig aus. Die Abstützbrücken 19, 20 bzw. 21, 22 liegen an den den Stirnkanten 6, 7 jeweils abgewandten Seiten der Querfäden 5 an und stützen sich dort ab. In der Papiermaschine wirken auf das Papiermaschinenband 1 Zugkräfte ein, die von der Kupplungseinrichtung 8 aufgenommen werden, wobei die Zugkräfte von den Längsfäden 3 auf die Querfäden 5 über die Verbindung an den Kreuzungspunkten und von dort auf die Abstützbrücken 19, 20 bzw. 21, 22 und damit auf die Kupplungseinrichtung 8 übertragen werden.

Es versteht sich, daß die Kupplungselemente 9, 10 mehrerer benachbarter Längsfäden 3 zusammengefaßt werden können, also durch entsprechende Stege miteinander verbunden sein können, so daß jedes Kupplungselement mehrere Längsfäden einfaßt.

Die Anbringung der Kupplungselemente 9, 10 bei dem Papiermaschinenband 1 erfolgt in der Weise, daß zunächst das aus dem Längsfadengelege 2 und dem Querfadengelege 4 bestehende Fadengebilde in der Weise hergestellt wird, wie in der EP 1 359 251 A1 beschrieben, jedoch ohne die beiden jeweils den Stirnkanten 6, 7 benachbarten Querfäden 5, wie sich dies aus Figur 3 ergibt. Dann werden die Kupplungselemente 9, 10 auf die freien Enden der Längsfäden 3 so aufgelegt, wie ebenfalls aus Figur 3 zu erkennen ist, wobei die Kupplungselemente 9, 10 jedoch nicht miteinander gekuppelt sind, so daß die Stirnkanten 6, 7 beliebig beabstandet sein können. Dann werden die noch fehlenden Querfäden 5 über die Längsfäden 3 in die Lücken zwischen die Abstützbrücken 19, 20, 21, 22 aufgelegt und mittels eines Lasers so erhitzt, daß sie mit den Längsfäden 3 durch gegenseitiges Verschmelzen verschweißt werden. Auf diese Weise sind die Kupplungselemente 8, 9 unverlierbar an den Endbereichen des Papiermaschinenbandes 1 angebracht, und die Kupplungselemente 9, 10 und damit die Endbereiche können dann miteinander gekuppelt werden.

Die nachfolgend beschriebenen Ausführungsbeispiele weichen von dem Ausführungsbeispiel gemäß den Figuren 1 bis 3 nur in der Ausbildung der Kupplungseinrichtungen ab, wobei die Kupplungseinrichtungen hinsichtlich ihrer Anbringung an den Stirnkanten 6, 7 des Papiermaschinenbandes 1 übereinstimmen, sieht man von der etwas anderen Gestaltung bei dem Ausführungsbeispiel gemäß den Figuren 4 bis 7 ab. Es wird deshalb nachstehend auf die Wiederholung der Beschreibung der Details des jeweiligen Papiermaschinenbandes verzichtet, soweit sie mit dem Papiermaschinenband 1 gemäß den Figuren 1 bis 3 übereinstimmen. Bezüglich der Bezugsziffern, die auch schon in den Figuren 1 bis 3 verwendet worden sind, wird auf die vorstehende Beschreibung zu diesen Bezugsziffern verwiesen.

Das in den Figuren 4 bis 7 dargestellte Papiermaschinenband 31 weist eine Kupplungseinrichtung 32 auf, die von einer Vielzahl von Kupplungselementen 33, 34, 35, 36 gebildet wird, von denen hier nur vier - und zwar zwei je Stirnkante 6, 7 - und diese nur teilweise zu sehen sind. Die Kupplungselemente 33, 34, 35, 36 erstrecken sich jeweils über eine Mehrzahl von Längsfäden 3. Gegenüber den Kupplungselementen 9, 10 bei der Kupplungseinrichtung 8 gemäß den Figuren 1 bis 3 weisen die Kupplungselemente 33, 34, 35, 36 Längsstreben 37, 38 auf, die jeweils nur den der zugehörigen Stirnkante 6 bzw. 7 benachbarten Querfaden 5 unterlaufen. An den den Stirnkanten 6, 7 abgewandten Seiten dieser Querfäden 5 verläuft jeweils eine Abstützleiste 39, 40, 41, 42, die die Längsfäden 3 überbrückt und über die sich die Kupplungselemente 33, 34, 35, 36 an den Querfäden 5 abstützen. Die Längsstreben 37, 38 füllen die Zwischenräume zwischen den Längsfäden 3 vollständig aus, sieht man von den sich gegenüberstehenden stirnseitigen Längsstreben zweier benachbarter Kupplungselemente 33, 34 bzw. 35, 36 ab.

Die Kupplungselemente 33, 34, 35, 36 stehen über die Stirnkanten 6, 7 laschenartig vor und haben in diesem Bereich im Mittenabstand der Längsfäden 3 angeordnete Fenster - beispielhaft mit 43 bezeichnet -, wobei sich jeweils zwei Fenster 43 in der Achse jedes Längsfadens 3 gegenüberstehen. Dadurch werden Gelenkstege - beispielhaft mit 44 bezeichnet - gebildet.

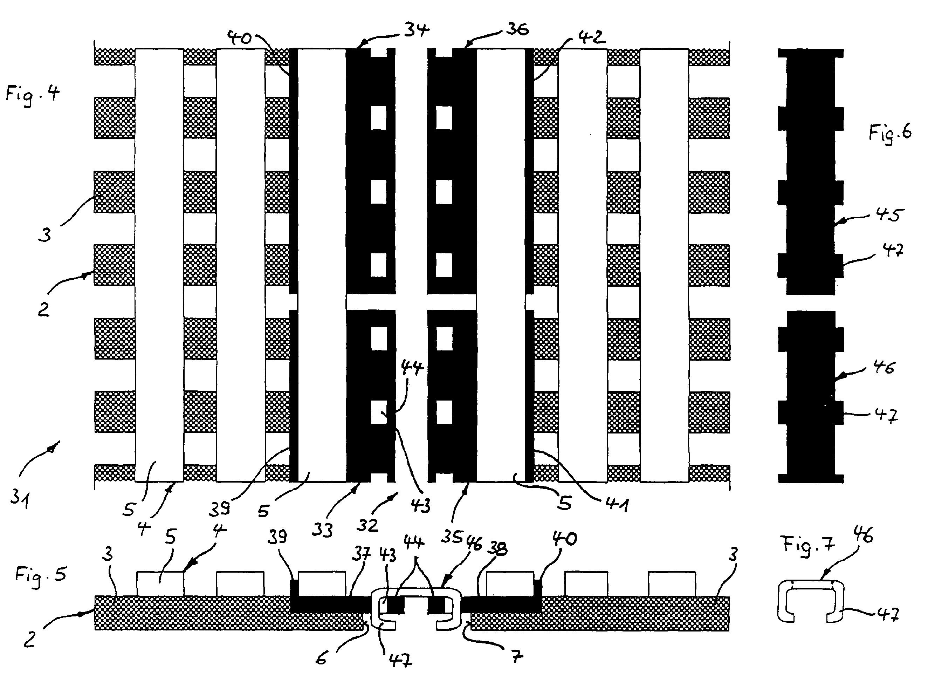

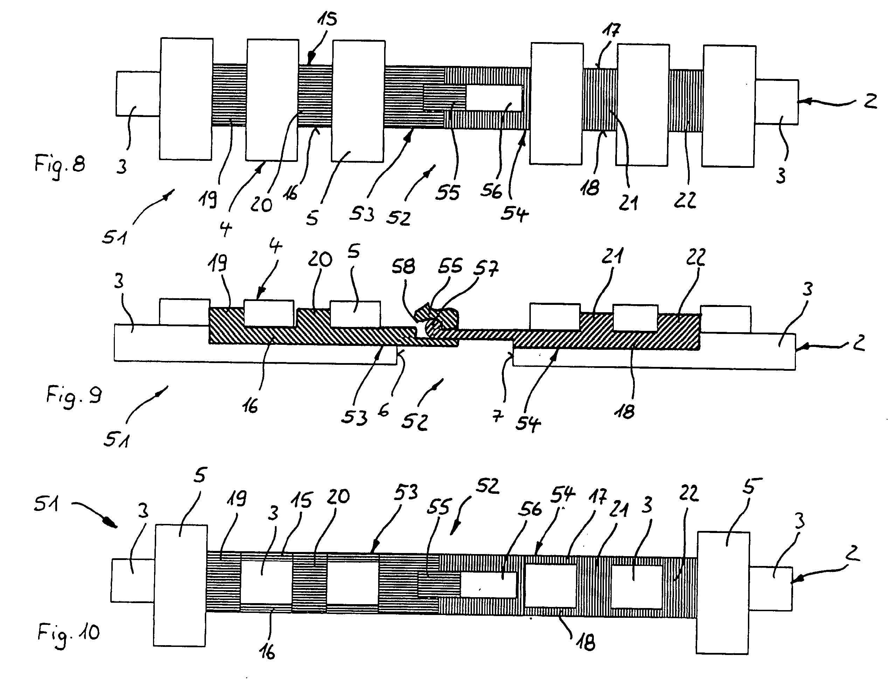

Für die Verbindung der sich gegenüberstehenden Kupplungselemente 33, 35 bzw. 34, 36 sind Hakenleisten 45, 46 vorgesehen, die in ihrer Erstreckung quer zur Laufrichtung des Papiermaschinenbandes 31 der Erstreckung der Kupplungselemente 33, 34, 35, 36 entsprechen. Die Hakenleisten 45, 46 weisen nach unten vorstehende Einzelhaken - beispielhaft mit 47 bezeichnet - auf, deren Breite etwas kleiner ist als die Breite der Fenster 43 und die an ihren freien Enden waagerecht umgebogen sind (vgl. Figur 7). Die Einzelhaken 47 haben den gleichen Abstand wie die Fenster 43. Wie aus Figur 5 zu ersehen ist, greifen die Einzelhaken 47 der Hakenleisten 45, 46 im montierten Zustand in die Fenster 43 ein. Dabei bilden sich zwei im wesentlichen durch die Gelenkstege 44 gehende Gelenkachsen. Die Kupplungseinrichtung 32 zeichnet sich auf diese Weise durch eine hohe Anpassungsfähigkeit auch an Umlenkwalzen kleineren Durchmessers aus.

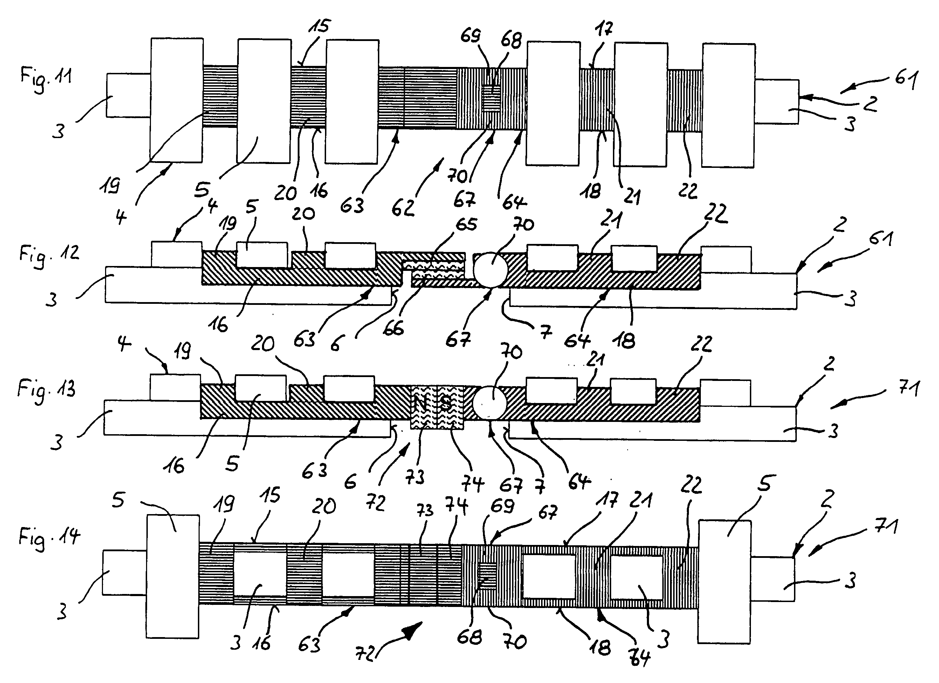

Das Ausführungsbeispiel gemäß den Figuren 8 bis 10 ist in der gleichen Weise dargestellt wie das Ausführungsbeispiel gemäß den Figuren 1 bis 3. Das Papaiermaschinenband 51 hat eine Kupplungseinrichtung 52, deren Kupplungselement 53, 54 in der gleichen Weise an den Längsfäden 3 befestigt sind wie bei dem Ausführungsbeispiel gemäß den Figuren 1 bis 3, so daß insoweit auf die dortige Beschreibung Bezug genommen wird.

Das in dieser Ansicht linksseitige Kupplungselement 53 läuft im Verbindungsbereich in einen Kupplungshaken .55 aus. Das rechtsseitige Kupplungselement 54 ist laschenförmig ausgebildet und hat ein längliches, rechteckiges Fenster 56, das an der freien Kante durch einen im Querschnitt kreisförmigen Gelenksteg 57 begrenzt wird. Der Gelenkschnitt 57 wird von dem Kupplungshaken 55 eingefaßt, so daß ein scharnierartiges Gelenk mit einer Gelenkachse gebildet wird, die parallel zu den Stirnkanten 6, 7 durch den Gelenksteg 57 geht. Der Kupplungshaken 55 ist als Schnapphaken ausgebildet, d.h. der von ihm gebildete offene Spalt 58 ist enger als der Durchmesser des Gelenksteges 57, so daß beim Einrasten des Gelenksteges 57 in den Kupplungshaken 55 letzterer elastisch aufgeweitet wird und nach dem Einrasten wieder in die gezeigte Stellung zurückspringt.

In den Figuren 11 und 12 ist ein Papiermaschinenband 61 in der gleichen Weise wie in den Figuren 1 bis 3 dargestellt. Es hat eine Kupplungseinrichtung 62, deren Befestigung an den Längsfäden 3 und deren Abstützung an den Querfäden 5 in der gleichen Weise ausgebildet ist wie bei den Ausführungsbeispielen gemäß den Figuren 1 und 3 sowie 8 bis 10. Insoweit wird auf die Beschreibung des erstgenannten Ausführungsbeispiels Bezug genommen.

Die Kupplungseinrichtung 62 hat für jeden Längsfaden 3 Kupplungselemente 63, 64. Diese überlappen sich im verbindungsbereich und haben an den einander zugewandten Seiten sich gegenseitig anziehende Magnete 65, 66. Aufgrund der Anziehungskraft dieser Magnete 65, 66 werden die Stirnkanten 6, 7 des Papiermaschinenbandes 61 miteinander verbunden.

Damit die Verbindung gelenkig ist, ist das rechtsseitige Kupplungselemente 64 zweiteilig ausgebildet, wobei die beiden Teile durch ein Scharniergelenk 67 miteinander verbunden sind. Das Scharniergelenk 67 weist eine Gelenköse 68 auf, die mit der den Magnet 66 tragenden Lasche verbunden ist, wobei die Gelenköse 68 von zwei benachbarten Gelenkösen 69, 70 eingefaßt ist. Alle drei Gelenkösen 68, 69, 70 werden von einem hier nicht näher dargestellten Gelenkstift durchsetzt.

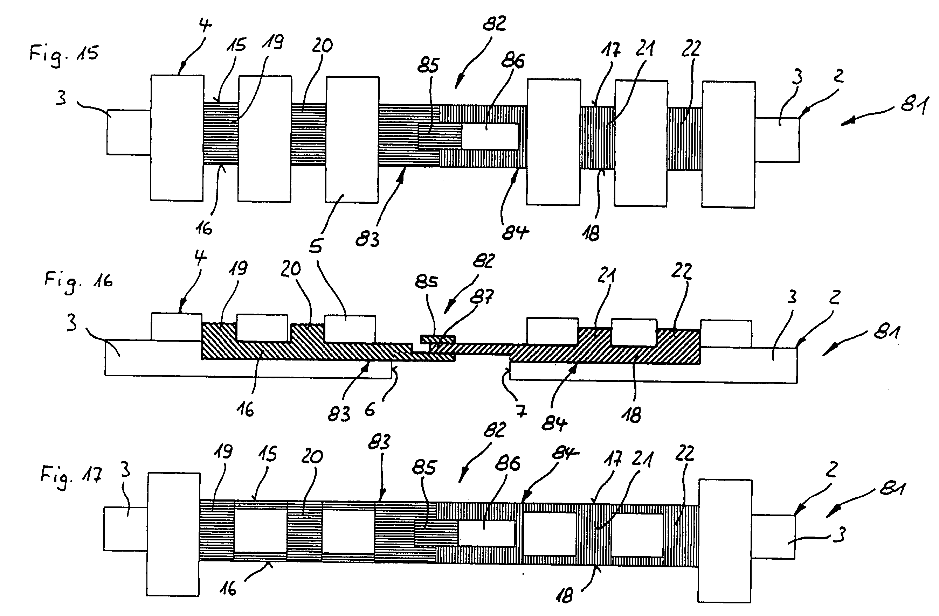

In den Figuren 13 und 14 ist ein Papiermaschinenband 71 dargestellt, dessen Kupplungseinrichtung 72 sich lediglich durch die Magnetanordnung unterscheidet, weshalb für die mit dem Papiermaschinenband 61 gemäß den Figuren 11 und 12 übereinstimmenden Teile die gleichen Bezugsziffern verwendet werden, auf deren vorstehende Beschreibung Bezug genommen wird. Bei der Kupplungseinrichtung 72 sind die Magnete 73, 74 stirnseitig an den Kupplungselementen 63, 64 befestigt. Sie ziehen sich gegenseitig an und sorgen so für eine Verbindung der Kupplungselemente 63, 64 und damit der Stirnkanten 6, 7 des Papiermaschinenbandes 71. Auch hier ist ein Scharniergelenk 67 vorhanden, daß in gleicher Weise ausgebildet ist wie das bei dem Papiermaschinenband 61 gemäß den Figuren 11 und 12.

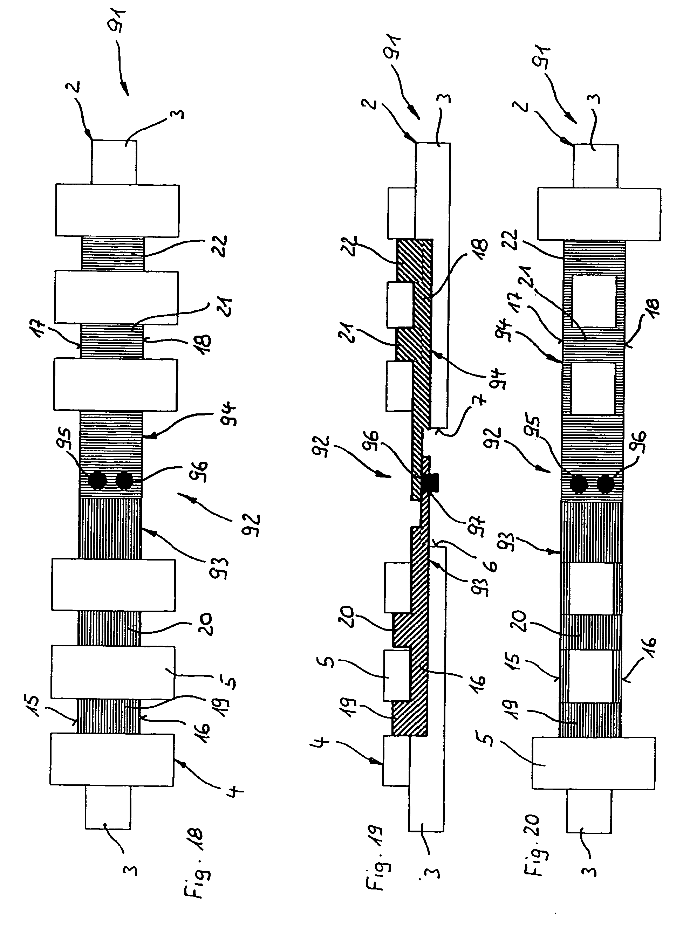

In den Figuren 15 bis 17 ist ein Papiermaschinenband 81 in der Darstellung gemäß den Figuren 1 bis 3 gezeigt. Es unterscheidet sich von diesem Ausführungsbeispiel ebenfalls nur durch die Ausbildung der Kupplungseinrichtung 82 und hier auch nur des Verbindungsbereich von deren Kupplungselementen 83, 84. Das linksseitige Kupplungselement 83 ist als Kupplungshaken 85 ausgebildet, der in einem Fenster 86 in dem rechtsseitigen Kupplungselement 84 einfaßt. Im Unterschied zu der Ausführungsform gemäß den Figuren 8 bis 10 sind der Kupplungshaken 85 und der das Fenster 86 begrenzende Steg 87 nicht gelenkartig ausgebildet. Die Verbindung ist jedoch in Grenzen biegsam, so daß das Papiermaschinenband 81 überall dort verwendet werden kann, wo die Umlenkung an Walzen größeren Durchmessers stattfindet.

Entsprechendes gilt auch für das in den Figuren 18 bis 20 dargestellte Papiermaschinenband 91. Dessen Kupplungseinrichtung 92 hat Kupplungselemente 93, 94, die sich in gleicher Weise an den Querfäden 5 abstützen wie bei den Ausführungsbeispielen gemäß den Figuren 1 bis 3 sowie 8 bis 17. Die Kupplungselemente 93, 94 überlappen sich gegenseitig, wobei das rechtsseitige Kupplungselement kurze, im Querschnitt kreisförmige Kupplungsbolzen 95, 96 aufweisen, die in passende Kupplungslöcher 97 in dem rechtsseitigen Kupplungselement 93 formschlüssig einfassen und gegebenenfalls auch eingerastet sind.

## Patentansprüche

1. Papiermaschinenband (1, 31, 51, 61, 71, 81, 91) mit sich quer zur Laufrichtung erstreckenden Stirnkanten (6, 7) und mit einem Fadengelege mit mindestens einem Längsfadengelege (2) und einem Querfadengelege (4), wobei die Längsfäden (3) mit den Querfäden (5) an den Kreuzungsstellen miteinander verbunden sind, sowie mit einer die Stirnkanten (6, 7) verbindenden bzw. verbindbaren Kupplungseinrichtung (8, 32, 52, 62, 72, 82, 92), die an beiden Stirnkanten (6, 7) jeweils an dem Fadengelege (2, 4) angreifende Kupplungselemente (9, 10; 33, 34, 35, 36; 53, 54; 63, 64; 83, 84; 93, 94) aufweist, **dadurch gekennzeichnet, daß** sich die Kupplungselemente (9, 10; 33, 34, 35, 36; 53, 54; 63, 64; 83, 84; 93, 94) an den den Stirnkanten (6, 7) abgewandten Seiten von zum Fadengelege gehörenden Querfäden (5) abstützen.

2. Papiermaschinenband nach Anspruch 1, **dadurch gekennzeichnet, daß** die Längs- und Querfäden (3, 5) flächig aneinanderliegen.

3. Papiermaschinenband nach Anspruch 2, **dadurch gekennzeichnet, daß** die Längs- und Querfäden (3, 5) als Flachfäden ausgebildet sind.

4. Papiermaschinenband nach einem der Ansprüche 1 bis 3, **dadurch gekennzeichnet, daß** das Fadengelege mehr als zwei Lagen aufweist, wobei jeweils eine Lage von Längsfäden (3) an einer Lage von Querfäden (5) anliegt.

5. Papiermaschinenband nach einem der Ansprüche 1 bis 4, **dadurch gekennzeichnet, daß** sich die Kupplungselemente (9, 10; 53, 54; 63, 64; 83, 84; 93, 94) jeweils an den den Stirnkanten (6, 7) abgewandten Seiten von mindestens zwei Querfäden (5) abstützen.

6. Papiermaschinenband nach Anspruch 5, **dadurch gekennzeichnet, daß** die Querfäden (5), an denen sich ein Kupplungselement (9, 10; 53, 54; 63, 64; 83, 84; 93, 94) abstützt, benachbart sind.

7. Papiermaschinenband nach einem der Ansprüche 1 bis 5, **dadurch gekennzeichnet, daß** sich die Kupplungselemente (9, 10; 33, 34, 35, 36; 53, 54; 63, 64; 83, 84; 93, 94) an dem der Stirnkante (6, 7) benachbarten Querfaden (5) abstützen.

8. Papiermaschinenband nach einem der Ansprüche 1 bis 7, **dadurch gekennzeichnet, daß** an einer Stirnkante (6, 7) mehrere Kupplungselemente (9, 10; 33, 34, 35, 36; 53, 54; 63, 64; 83, 84; 93, 94) in Querrichtung nebeneinander angeordnet sind.

9. Papiermaschinenband nach einem der Ansprüche 1 bis 8, **dadurch gekennzeichnet, daß** sich die Kupplungselemente (9, 10; 33, 34, 35, 36; 53, 54; 63, 64; 83, 84; 93, 94) an den Querfäden (5) im Kreuzungsbereich mit den Längsfäden (3) abstützen.

10. Papiermaschinenband nach einem der Ansprüche 1 bis 9, **dadurch gekennzeichnet, daß** die Kupplungselemente (9, 10; 33, 34, 35, 36; 53, 54; 63, 64; 83, 84; 93, 94) jeweils mindestens eine Längsstrebe (15, 16, 17, 18; 37, 38) aufweisen, die sich in Zwischenräume zwischen jeweils zwei Längsfäden (3) erstrecken und jeweils wenigstens eine Querstrebe (19, 20, 21, 22, 39, 40, 41, 42) aufweisen, die an einer der Stirnkante (6, 7) abgewandten Seite des jeweiligen Querfadens (5) anliegt bzw. anliegen.

11. Papiermaschinenband nach Anspruch 10, **dadurch gekennzeichnet, daß** die Querstreben (19, 20, 21, 22, 39, 40, 41, 42) die Längsstreben (15, 16, 17, 18; 37, 38) miteinander verbinden.

12. Papiermaschinenband nach Anspruch 10 oder 11, **dadurch kennzeichnet, daß** die Längsstreben (15, 16, 17, 18; 37, 38) wenigstens einen Längsfaden (3) beidseitig einfassen.

13. Papiermaschinenband nach Anspruch 12, **dadurch gekennzeichnet, daß** die Längsstreben (37, 38) mehrere Längsfäden (3) beidseitig einfassen.

14. Papiermaschinenband nach Anspruch 12 oder 13, **dadurch gekennzeichnet, daß** die Längsstreben (37, 38) die Zwischenräume zwischen zwei Längsfäden (3) ausfüllen.

15. Papiermaschinenband nach einem der Ansprüche 10 bis 14, **dadurch gekennzeichnet, daß** die Längsstreben eine Querstrebe an der der Stirnkante zugewandten Seite des dieser Stirnkante benachbarten Querfadens aufweisen.

16. Papiermaschinenband nach einem der Ansprüche 1 bis 15, **dadurch gekennzeichnet, daß** die Kupplungselemente (9, 10; 33, 34, 35, 36; 53, 54; 63, 64) in miteinander verbundenem Zustand wenigstens ein Gelenk mit einer zu den Stirnkanten parallelen Gelenkachse ausbilden.

17. Papiermaschinenband nach Anspruch 16, **dadurch gekennzeichnet, daß** das bzw. die Gelenk(e) als Scharniergelenk(e) ausgebildet ist bzw. sind.

18. Papiermaschinenband nach Anspruch 17, **dadurch gekennzeichnet, daß** das Scharniergelenk aus einem Kupplungsdraht (14) und den Kupplungsdraht (14) umschließenden Kupplungsösen (11, 12, 13; 68, 69, 70) besteht, die an den Kupplungselementen (9, 10, 63, 64) ausgebildet sind.

19. Papiermaschinenband nach Anspruch 17, **dadurch gekennzeichnet, daß** jeweils ein Kupplungsglied von einem Kupplungselement und ein benachbartes Kupplungsglied von dem gegenüberliegenden Kupplungselement Gliederpaare bilden, die scharnierartig ineinander gesteckt sind.

20. Papiermaschinenband nach Anspruch 19, **dadurch gekennzeichnet, daß** das eine Kupplungsglied eines Gliederpaares einen Zapfen aufweist, der in eine komplementäre Ausnehmung in dem anderen Kupplungsglied dieses Gliederpaares einfaßt.

21. Papiermaschinenband nach Anspruch 20, **dadurch gekennzeichnet, daß** die Zapfen in den Ausnehmungen derart verrastet sind, daß die Kupplungsglieder gegeneinander scharnierartig verschwenkbar sind, jedoch nicht axial gegenseitig verschiebbar sind.

22. Papiermaschinenband nach Anspruch 16, **dadurch gekennzeichnet, daß** in einer Gelenkachse eine Vielzahl von Gelenken ausgebildet ist, die jeweils aus einem Kupplungssteg (57) und einem diesen hinterfassenden Kupplungshaken (55) bestehen.

23. Papiermaschinenband nach Anspruch 22, **dadurch gekennzeichnet, daß** der Kupplungshaken (55) als Schnapphaken ausgebildet ist.

24. Papiermaschinenband nach Anspruch 22 oder 23, **dadurch gekennzeichnet, daß** die Kupplungsstege (57) durch Ausnehmungen (56) in den Kupplungselementen (54) gebildet sind.

25. Papiermaschinenband nach Anspruch 16, **dadurch gekennzeichnet, daß** das bzw. die Gelenk(e) als Biegegelenk(e) ausgebildet ist bzw. sind.

26. Papiermaschinenband nach einem der Ansprüche 16 bis 25, **dadurch gekennzeichnet, daß** das bzw. die eine Gelenkachse bildende(n) Gelenke(n) an den Kupplungselementen (63) einer Stirnkante (6) ausgebildet ist bzw. sind und diese Kupplungselemente (63) über Verbindungsmittel (65, 66; 73, 74) mit den Kupplungselementen (64) an der anderen Stirnkante (7) verbunden sind.

27. Papiermaschinenband nach einem der Ansprüche 16 bis 25, **dadurch gekennzeichnet, daß** die Gelenke zwei nebeneinanderliegende Gelenkachsen bilden.

28. Papiermaschinenband nach Anspruch 27, **dadurch gekennzeichnet, daß** die Kupplungselemente (33, 34, 35, 36) längs jeder Gelenkachse eine Vielzahl von Kupplungsstegen (44) ausbilden, die über zumindest eine Hakenleiste (45, 46) mit die Kupplungsstege (44) hinterfassenden Kupplungshaken (47) verbunden sind.

29. Papiermaschinenband nach einem der Ansprüche 1 bis 28, **dadurch gekennzeichnet, daß** die Kupplungselemente (83, 84, 93, 94) formschlüssig ineinandergreifende Verbindungsmittel (85, 86; 93, 94, 95, 96) aufweisen, über die die Kupplungselemente (83, 93) an einer Stirnkante (6) mit den Kupplungselemente (84, 94) an der anderen Stirnkante (7) verbunden bzw. verbindbar sind.

30. Papiermaschinenband nach Anspruch 29, **dadurch gekennzeichnet, daß** die Verbindungsmittel einerseits als Verbindungsausnehmungen (97) und andererseits als in die Verbindungsausnehmungen (97) einfassende verbindungsvorsprünge (95, 96) ausgebildet sind.

31. Papiermaschinenband nach Anspruch 30, **dadurch gekennzeichnet, daß** die Verbindungsausnehmungen (97) als Löcher und die Verbindungsvorsprünge (95, 96) als Verbindungshaken oder -stifte ausgebildet sind.

32. Papiermaschinenband nach einem der Ansprüche 1 bis 31, **dadurch gekennzeichnet, daß** die Kupplungselemente (63, 64) als Magnete (65, 66; 73, 74) ausgebildete Verbindungsmittel aufweisen.

33. Papiermaschinenband nach Anspruch 33, **dadurch gekennzeichnet, daß** die Magnete (73, 74) stirnseitig mit sich senkrecht zur Ebene des Papiermaschinenbandes (71) erstreckenden Verbindungsflächen aneinanderliegen.

34. Papiermaschinenband nach Anspruch 32, **dadurch gekennzeichnet, daß** die Magnete (65, 66) aufeinander mit sich in der Ebene des Papiermaschinenbandes (61) erstreckenden Verbindungsflächen liegen.

## Claims

1. A paper machine belt (1, 31, 51, 61, 71, 81, 91) having front ends (6, 7) extending transversely to the machine direction and having a yarn lay-up having at least one longitudinal yarn layer (2) and one transverse yarn layer (4), the longitudinal yarns (3) being interconnected to the transverse yarns (5) at the intersection points; and having a coupling device (8, 32, 52, 62, 72, 82, 92) connecting or capable of connecting the front ends (6, 7), which device comprises at both front ends (6, 7) coupling elements (9, 10; 33, 34, 35, 36; 53, 54; 63, 64; 83, 84; 93, 94) engaging respectively onto the yarn lay-up (2, 4), **characterized in that** the coupling elements (9, 10; 33, 34, 35, 36; 53, 54; 63, 64; 83, 84; 93, 94) are supported on the sides, facing away from the front edges (6, 7), of transverse yarns (5) belonging to the yarn lay-up.

2. The paper machine belt as defined in Claim 1, **characterized in that** the longitudinal and transverse yarns (3, 5) lie on one another in planar fashion.

3. The paper machine belt as defined in Claim 2, **characterized in that** the longitudinal and transverse yarns (3, 5) are embodied as flat yarns.

4. The paper machine belt as defined in any of Claims 1 through 3, **characterized in that** the yarn lay-up comprises more than two plies, one ply of longitudinal yarns (3) being in contact in each case against a ply of transverse yarns (5).

5. The paper machine belt as defined in any of Claims 1 through 4, **characterized in that** the coupling elements (9, 10; 53, 54; 63, 64; 83, 84; 93, 94) are each supported on the sides, facing away from the front edges (6, 7), of at least two transverse yarns (5).

6. The paper machine belt as defined in Claim 5, **characterized in that** the transverse yarns (5) on which a coupling element (9, 10; 53, 54; 63, 64; 83, 84; 93, 94) is supported are adjacent.

7. The paper machine belt as defined in any of Claims 1 through 5, **characterized in that** the coupling elements (9, 10; 33, 34, 35, 36; 53, 54; 63, 64; 83, 84; 93, 94) are supported on the transverse yarn (5) adjacent to the front edge (6, 7).

8. The paper machine belt as defined in any of Claims 1 through 7, **characterized in that** several coupling elements (9, 10; 33, 34, 35, 36; 53, 54; 63, 64; 83, 84; 93, 94) are arranged next to one another in the transverse direction at one front edge (6, 7).

9. The paper machine belt as defined in any of Claims 1 through 8, **characterized in that** the coupling elements (9, 10; 33, 34, 35, 36; 53, 54; 63, 64; 83, 84; 93, 94) are supported on the transverse yarns (5) in the intersection region with the longitudinal yarns (3).

10. The paper machine belt as defined in any of Claims 1 through 9, **characterized in that** the coupling elements (9, 10; 33, 34, 35, 36; 53, 54; 63, 64; 83, 84; 93, 94) each comprise at least one longitudinal strut (15, 16, 17, 18; 37, 38) that extend in interstices between each two longitudinal yarns (3) and each comprise at least one transverse strut (19, 20, 21, 22, 39, 40, 41, 42) that is or are in contact against a side, facing away from the front edge (6, 7), of the respective transverse thread (5).

11. The paper machine belt as defined in Claim 10, **characterized in that** the transverse struts (19, 20, 21, 22, 39, 40, 41, 42) interconnect the longitudinal struts (15, 16, 17, 18; 37, 38).

12. The paper machine belt as defined in Claim 10 or 11, **characterized in that** the longitudinal struts (15, 16, 17, 18; 37, 38) border at least one longitudinal yarn (3) on both sides.

13. The paper machine belt as defined in Claim 12, **characterized in that** the longitudinal struts (37, 38) border several longitudinal yarns (3) on both sides.

14. The paper machine belt as defined in Claim 12 or 13, **characterized in that** the longitudinal struts (37, 38) fill up the interstices between two longitudinal yarns (3).

15. The paper machine belt as defined in any of Claims 10 through 14, **characterized in that** the longitudinal struts comprise a transverse strut on the side, facing toward the front edge, of the transverse yarn adjacent to that front edge.

16. The paper machine belt as defined in any of Claims 1 through 15, **characterized in that** in the interconnected state the coupling elements (9, 10; 33, 34, 35, 36; 53, 54; 63, 64) constitute at least one articulation having an articulation axis parallel to the front edges.

17. The paper machine belt as defined in Claim 16, **characterized in that** the articulation or articulations is or are embodied as (a) hinge articulation(s).

18. The paper machine belt as defined in Claim 17, **characterized in that** the hinge articulation comprises a coupling wire (14) and coupling eyelets (11, 12, 13; 68, 69, 70) that surround the coupling wire (14) and are embodied on the coupling elements (9, 10, 63, 64).

19. The paper machine belt as defined in Claim 17, **characterized in that** in each case a coupling member of one coupling element and an adjacent coupling member of the oppositely located coupling element form member pairs that are inserted in hinge-like fashion into one another.

20. The paper machine belt as defined in Claim 19, **characterized in that** the one coupling member of a member pair comprises a peg that fits into a complementary recess in the other coupling member of that member pair.

21. The paper machine belt as defined in Claim 20, **characterized in that** the pegs are snap-locked into the recesses in such a way that the coupling members are pivotable with respect to one another in hinge-like fashion, but are not axially displaceable with respect to one another.

22. The paper machine belt as defined in Claim 16, **characterized in that** in one articulation axis, there are configured a plurality of articulations that each comprise a coupling link (57) and a coupling hook (55) that fits behind it.

23. The paper machine belt as defined in Claim 22, **characterized in that** the coupling hook (55) is embodied as a snap hook.

24. The paper machine belt as defined in Claim 22 or 23, **characterized in that** the coupling links (57) are formed by recesses (56) in the coupling elements (54).

25. The paper machine belt as defined in Claim 16, **characterized in that** the articulation(s) is or are implemented as (a) flexural articulations(s).

26. The paper machine belt as defined in any of Claims 16 through 25, **characterized in that** the articulation(s) constituting an articulation axis is or are embodied on the coupling elements (63) of one front edge (6), and those coupling elements (63) are connected via connecting means (65, 66; 73, 74) to the coupling elements (64) on the other front edge (7).

27. The paper machine belt as defined in any of Claims 16 through 25, **characterized in that** the articulations constitute two adjacently located articulation axes.

28. The paper machine belt as defined in Claim 27, **characterized in that** the coupling elements (33, 34, 35, 36) along each articulation axis constitute a plurality of coupling links (44) that are connected via at least one hook strip (45, 46) to coupling hooks (47) that fit behind the coupling links (44).

29. The paper machine belt as defined in any of Claims 1 through 28, **characterized in that** the coupling elements (83, 84, 93, 94) comprise connecting means (85, 86; 93, 94, 95, 96) engaging positively into one another, by way of which the coupling elements (83, 93) on one front edge (6) are connected or connectable to the coupling elements (84, 94) on the other front edge (7).

30. The paper machine belt as defined in Claim 29, **characterized in that** the connecting means are embodied on the one hand as connecting recesses (97) and on the other hand as connecting projections (95, 96) fitting into the connecting recesses (97).

31. The paper machine belt as defined in Claim 30, **characterized in that** the connecting recesses (97) are embodied as holes and the connecting projections (95, 96) as connecting hooks or pins.

32. The paper machine belt as defined in any of Claims 1 through 31, **characterized in that** the coupling elements (63, 64) comprise connecting means embodied as magnets (65, 66; 73, 74).

33. The paper machine belt as defined in Claim 33, **characterized in that** the magnets (73, 74) are located next to one another at the ends with connecting surfaces extending perpendicular to the plane of the paper machine belt (71).

34. The paper machine belt as defined in Claim 32, **characterized in that** the magnets (65, 66) rest on one another with connecting surfaces extending in the plane of the paper machine belt (61).

## Revendications

1. Bande (1, 31, 51, 61, 71, 81, 91) pour machine à papier, avec des bords frontaux (6, 7) s'étendant transversalement au sens machine et avec un non-tissé comprenant au moins un non-tissé (2) de fils longitudinaux et un non-tissé (4) de fils transversaux, les fils longitudinaux (3) étant reliés aux fils transversaux (5) en des points d'intersection, ainsi qu'avec un dispositif d'accouplement (8, 32, 52, 62, 72, 82, 92) reliant ou pouvant relier les bords frontaux (6, 7), qui présente des éléments d'accouplement (9, 10 ; 33, 34, 35, 36 ; 53, 54 ; 63, 64 ; 83, 84 ; 93, 94) agissant respectivement aux deux bords frontaux (6, 7) sur le non-tissé (2, 4), **caractérisée en ce que** les éléments d'accouplement (9, 10 ; 33, 34, 35, 36 ; 53, 54 ; 63, 64 ; 83, 84 ; 93, 94) s'appuient sur les côtés de fils transversaux (5) faisant partie du non-tissé qui sont opposés aux bords frontaux (6, 7).

2. Bande pour machine à papier selon la revendication 1, **caractérisée en ce que** les fils longitudinaux et transversaux (3, 5) s'appliquent à plat les uns sur les autres.

3. Bande pour machine à papier selon la revendication 2, **caractérisée en ce que** les fils longitudinaux et transversaux (3, 5) sont réalisés sous forme de fils plats.

4. Bande pour machine à papier selon l'une des revendications 1 à 3, **caractérisée en ce que** le non-tissé présente plus de deux couches, une couche de fils longitudinaux (3) s'appliquant chaque fois sur une couche de fils transversaux (5).

5. Bande pour machine à papier selon l'une des revendications 1 à 4, **caractérisée en ce que** les éléments d'accouplement (9, 10 ; 53, 54 ; 63, 64 ; 83, 84 ; 93, 94) s'appuient respectivement sur les côtés d'au moins deux fils transversaux (5) qui sont opposés aux bords frontaux (6, 7).

6. Bande pour machine à papier selon la revendication 5, **caractérisée en ce que** les fils transversaux (5) sur lesquels s'appuie un élément d'accouplement (9, 10 ; 53, 54 ; 63, 64 ; 83, 84 ; 93, 94) sont voisins.

7. Bande pour machine à papier selon l'une des revendications 1 à 5, **caractérisée en ce que** les éléments d'accouplement (9, 10 ; 33, 34, 35, 36 ; 53, 54 ; 63, 64 ; 83, 84 ; 93, 94) s'appuient sur le fil transversal (5) voisin du bord frontal (6, 7).

8. Bande pour machine à papier selon l'une des revendications 1 à 7, **caractérisée en ce que**, sur un bord frontal (6, 7), plusieurs éléments d'accouplement (9, 10 ; 33, 34, 35, 36 ; 53, 54 ; 63, 64 ; 83, 84 ; 93, 94) sont disposés en juxtaposition dans le sens transversal.

9. Bande pour machine à papier selon l'une des revendications 1 à 8, **caractérisée en ce que** les éléments d'accouplement (9, 10 ; 33, 34, 35, 36 ; 53, 54 ; 63, 64 ; 83, 84 ; 93, 94) s'appuient sur les fils transversaux (5) dans la région d'intersection avec les fils longitudinaux (3).

10. Bande pour machine à papier selon l'une des revendications 1 à 9, **caractérisée en ce que** les éléments d'accouplement (9, 10 ; 33, 34, 35, 36 ; 53, 54 ; 63, 64 ; 83, 84 ; 93, 94) présentent chacun au moins un montant longitudinal (15, 16, 17, 18 ; 37, 38), qui s'étend dans des espaces intermédiaires entre deux fils longitudinaux respectifs (3), et présentent chacun au moins un montant transversal (19, 20, 21, 22 ; 39, 40, 41, 42) qui s'applique sur un côté du fil transversal respectif (5) qui est opposé au bord frontal (6, 7).

11. Bande pour machine à papier selon la revendication 10, **caractérisée en ce que** les montants transversaux (19, 20, 21, 22 ; 39, 40, 41, 42) relient entre eux les montants longitudinaux (15, 16, 17, 18 ; 37, 38).

12. Bande pour machine à papier selon la revendication 10 ou 11, **caractérisée en ce que** les montants longitudinaux (15, 16, 17, 18 ; 37, 38) bordent de part et d'autre au moins un fil longitudinal (3).

13. Bande pour machine à papier selon la revendication 12, **caractérisée en ce que** les montants longitudinaux (37, 38) bordent de part et d'autre plusieurs fils longitudinaux (3).

14. Bande pour machine à papier selon la revendication 12 ou 13, **caractérisée en ce que** les montants longitudinaux (37, 38) remplissent les espaces intermédiaires entre deux fils longitudinaux (3).

15. Bande pour machine à papier selon l'une des revendications 10 à 14, **caractérisée en ce que** les montants longitudinaux présentent un montant transversal sur le côté, tourné vers le bord frontal, du fil transversal voisin de ce bord frontal.

16. Bande pour machine à papier selon l'une des revendications 1 à 15, **caractérisée en ce que** les éléments d'accouplement (9, 10 ; 33, 34, 35, 36 ; 53, 54 ; 63, 64) forment, dans l'état mutuellement relié, au moins une articulation dont l'axe d'articulation est parallèle aux bords frontaux.

17. Bande pour machine à papier selon la revendication 16, **caractérisée en ce que** la ou les articulations sont réalisées sous forme d'articulation(s) à charnière.

18. Bande pour machine à papier selon la revendication 17, **caractérisée en ce que** l'articulation à charnière est constituée d'un fil métallique d'accouplement (14) et d'oeillets d'accouplement (11, 12, 13 ; 68, 69, 70) entourant le fil métallique d'accouplement (14), qui sont formés sur les éléments d'accouplement (9, 10 ; 63, 64).

19. Bande pour machine à papier selon la revendication 17, **caractérisée en ce qu'**un organe d'accouplement respectif d'un élément d'accouplement et un organe d'accouplement voisin de l'élément d'accouplement opposé forment des paires d'organes d'accouplement qui sont en emboîtement mutuel à la manière d'une charnière.

20. Bande pour machine à papier selon la revendication 19, **caractérisée en ce que** l'un des organes d'accouplement d'une paire présente un tenon qui s'insère dans un évidement complémentaire prévu dans l'autre organe d'accouplement de cette paire.

21. Bande pour machine à papier selon la revendication 20, **caractérisée en ce que** les tenons sont enclenchés dans les évidements de telle sorte que les organes d'accouplement sont à pivotement relatif à la manière d'une charnière, mais ne sont pas à translation relative dans le sens axial.

22. Bande pour machine à papier selon la revendication 16, **caractérisée en ce que** plusieurs articulations sont formées dans un axe d'articulation, qui sont chacune constituées d'une nervure d'accouplement (57) et d'un crochet d'accouplement (55) s'engageant derrière cette nervure.

23. Bande pour machine à papier selon la revendication 22, **caractérisée en ce que** le crochet d'accouplement (55) est réalisé sous forme de crochet à déclic.

24. Bande pour machine à papier selon la revendication 22 ou 23, **caractérisée en ce que** les nervures d'accouplement (57) sont formées par des évidements (56) dans les éléments d'accouplement (54).

25. Bande pour machine à papier selon la revendication 16, **caractérisée en ce que** la ou les articulations sont réalisées sous forme d'articulations de flexion.

26. Bande pour machine à papier selon l'une des revendications 16 à 25, **caractérisée en ce que** la ou les articulations formant un axe d'articulation sont formées sur les éléments d'accouplement (63) d'un bord frontal (6), et ces éléments d'accouplement (63) sont reliés via des moyens de liaison (65, 66 ; 73, 74) aux éléments d'accouplement (64) sur l'autre bord frontal (7).

27. Bande pour machine à papier selon l'une des revendications 16 à 25, **caractérisée en ce que** les articulations forment deux axes d'articulation juxtaposés.

28. Bande pour machine à papier selon la revendication 27, **caractérisée en ce que** les éléments d'accouplement (33, 34, 35, 36) forment le long de chaque axe d'articulation une pluralité de nervures d'accouplement (44) qui sont reliées via au moins une barrette à crochets (45, 46) à des crochets d'accouplement (47) s'engageant derrière les nervures d'accouplement (47).

29. Bande pour machine à papier selon l'une des revendications 1 à 28, **caractérisée en ce que** les éléments d'accouplement (83, 84 ; 93, 94) présentent des moyens de liaison (85, 86 ; 93, 94, 95, 96) entrant en engagement positif mutuel, via lesquels les éléments d'accouplement (83, 93) sur un bord frontal (6) sont ou peuvent être reliés aux éléments d'accouplement (84, 94) sur l'autre bord frontal (7).

30. Bande pour machine à papier selon la revendication 29, **caractérisée en ce que** les moyens de liaison sont réalisés d'une part sous forme d'évidements de liaison (97) et d'autre part sous forme de saillies de liaisons (95, 96) s'insérant dans les évidements de liaison (97).

31. Bande pour machine à papier selon la revendication 30, **caractérisée en ce que** les évidements de liaison (97) sont réalisés sous forme de trous et les saillies de liaisons (95, 96) sous forme de crochets ou de broches de liaison.

32. Bande pour machine à papier selon l'une des revendications 1 à 31, **caractérisée en ce que** les éléments d'accouplement (63, 64) présentent des moyens de liaison réalisés sous forme d'aimants (65, 66 ; 73, 74).

33. Bande pour machine à papier selon la revendication 32, **caractérisée en ce que** les aimants (73, 74) sont en application mutuelle frontale par des faces de liaison s'étendant perpendiculairement au plan de la bande (71) pour machine à papier.

34. Bande pour machine à papier selon la revendication 32, **caractérisée en ce que** les aimants (65, 66) reposent les uns sur les autres par des faces de liaison s'étendant dans le plan de la bande (61) pour machine à papier.
